(19) **Europäisches Patentamt**
**European Patent Office**
**Office européen des brevets**

(11) **EP 2 245 771 B1**

(12) **FASCICULE DE BREVET EUROPEEN**

(45) Date de publication et mention
de la délivrance du brevet:
**22.02.2012 Bulletin 2012/08**

(51) Int Cl.:
**H04J 3/06** *(2006.01)*          **H04L 12/26** *(2006.01)*

(21) Numéro de dépôt: **08872698.9**

(22) Date de dépôt: **24.12.2008**

(86) Numéro de dépôt international:
**PCT/FR2008/001823**

(87) Numéro de publication internationale:
**WO 2009/103909 (27.08.2009 Gazette 2009/35)**

(54) **PROCÉDÉ ET DISPOSITIF DE MESURE DE LA DÉRIVE TEMPORELLE D'UN ÉQUIPEMENT ÉLECTRONIQUE RELIÉ À UN RÉSEAU**

VERFAHREN UND VORRICHTUNG ZUR MESSUNG DER ZEITLICHEN DRIFT EINES MIT EINEM NETZWERK VERBUNDENEN ELEKTRONISCHEN GERÄTS

METHOD AND DEVICE FOR MEASURING THE TEMPORAL DRIFT OF AN ELECTRONIC APPARATUS LINKED TO A NETWORK

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **31.01.2008 FR 0850614**

(43) Date de publication de la demande:
**03.11.2010 Bulletin 2010/44**

(73) Titulaire: **AIRBUS OPERATIONS**
**31060 Toulouse (FR)**

(72) Inventeurs:
• **CANDIA, Fabrice**
**F-31310 Rieux (FR)**
• **CASSÉ, Patrice**
**F-31330 Merville (FR)**

(74) Mandataire: **Petit, Maxime**
**Santarelli**
**14, avenue de la Grande Armée**
**75017 Paris (FR)**

(56) Documents cités:
**WO-A-03/046766     US-A1- 2004 066 775**

**Description**

La présente invention concerne un procédé et un dispositif de mesure de la dérive temporelle d'un équipement électronique relié à un réseau. Elle s'applique, en particulier, à fournir une mesure de la dérive temporelle du système d'horodatage des analyseurs réseaux.

Les systèmes d'horodatage des analyseurs réseau présentent une imprécision. Or ces systèmes d'horodatage sont chargés de dater les trames réseau capturées du lien analysé. Un problème que vise à résoudre la présente invention consiste ainsi à évaluer la dérive temporelle de la fonction d'horodatage d'un analyseur réseau par rapport à un temps de référence.

A contrario d'un équipement de mesure tel qu'un multimètre ou un oscilloscope, les analyseurs réseau ne subissent pas de calibrage périodique car les sociétés de métrologie ne sont pas équipées pour cela et les analyseurs réseaux ne sont pas prévus pour.

Le document US 2004/0066775 divulgue un dispositif et une méthode permettant de calculer un temps de propagation en boucle entre un premier et un second points limite dans un réseau. Pour cela un analyseur réseau additionne le premier et le second temps de transmission entre les premier et second points limite pour déterminer le temps de propagation en boucle entre ces points.

Le document WO03/046766 divulgue une méthode pour créer des plages d'horodatage envoyées entre ordinateurs comprenant des étapes de réception et d'envoi d'un signal de temps de référence universel coordonné. Pour cela il utilise un système de positionnement global.

Les performances de la fonction d'horodatage des analyseurs réseau n'étaient jusqu'alors pas remises en question. Les inventeurs ont donc observé un besoin d'étalonnage des analyseurs réseau.

A cet effet, selon un premier aspect, la présente invention vise un procédé de mesure de la dérive temporelle d'un équipement électronique relié à un réseau et susceptible de fournir un horodatage, caractérisé en ce qu'il comporte :

- une étape de capture et d'horodatage par ledit équipement d'au moins deux messages incluant chacun un temps de référence étalon circulant sur ledit réseau et
- une étape de détermination de la précision de la fonction d'horodatage de l'équipement en fonction desdits temps de référence étalon et desdits horodatages fournis par ledit équipement.

Grâce à ces dispositions, on mesure la dérive temporelle sans démontage ni paramétrage spécifique de l'équipement, puisqu'on effectue une utilisation nominale et opérationnelle de cet équipement. De plus, la mise en oeuvre du procédé objet de la présente invention permet d'atteindre un niveau de précision de l'étalonnage plus ou moins élevé en fonction du besoin de l'utilisateur. La présente invention présente également l'avantage de permettre d'étalonner plusieurs équipements simultanément.

Selon des caractéristiques particulières, ledit équipement est un analyseur réseau.

Selon des caractéristiques particulières, au cours de l'étape de capture, chaque message capturé comporte une trame Ethernet circulant sur ledit réseau, trame qui inclue le temps de référence étalon.

Selon des caractéristiques particulières, chaque message incluant un temps de référence étalon est conforme au protocole NTP (acronyme de « Network Time Protocol » pour protocole de temps réseau).

Selon des caractéristiques particulières, au cours de l'étape de capture, on capture une pluralité de messages incluant un temps de référence étalon sur une durée supérieure à dix minutes.

Préférentiellement, cette durée est de l'ordre d'une heure. En effet, plus la durée de capture est longue, meilleure est la précision de l'étalonnage.

Selon des caractéristiques particulières, au cours de l'étape de détermination de la précision de la fonction d'horodatage de l'équipement, on calcule une dérive temporelle en comparant la durée écoulée entre les dates de capture d'au moins deux messages incluant un temps de référence étalon fournies par la fonction horodatage de l'équipement avec la différence des temps de référence étalons contenus dans ces messages.

Selon des caractéristiques particulières, le procédé objet de la présente invention, tel que succinctement exposé ci-dessus, comporte une étape de génération du temps de référence étalon à partir de signaux fournis par une constellation de satellites équipés d'horloges atomiques.

Ces signaux proviennent, en effet, d'une source de référence temporelle précise.

Selon des caractéristiques particulières, au cours de l'étape de capture, ledit équipement applique un filtre de capture qui ne laisse passer que lesdits messages incluant un temps de référence étalon.

Selon un deuxième aspect, la présente invention vise un dispositif de mesure de la dérive temporelle d'un équipement électronique relié à un réseau et susceptible de fournir un horodatage, caractérisé en ce qu'il comporte :

- un moyen de capture d'au moins deux messages incluant chacun un temps de référence étalon circulant sur ledit réseau ;

- un moyen d'horodatage desdits au moins deux messages, et
- un moyen de détermination de la précision de la fonction d'horodatage de l'équipement en fonction desdits temps de référence étalon et desdits horodatages fournis par ledit équipement.

Selon des caractéristiques particulières, ledit équipement est un analyseur réseau.

Selon des caractéristiques particulières, le moyen de capture est adapté à capturer au moins une trame Ethernet circulant sur ledit réseau, trame qui inclue le temps de référence étalon.

Selon des caractéristiques particulières, le moyen de capture est adapté à capturer au moins un message incluant un temps de référence étalon conforme au protocole NTP (acronyme de « Network Time Protocol » pour protocole de temps réseau).

Selon des caractéristiques particulières, le moyen de capture est adapté à capturer une pluralité de messages incluant un temps de référence étalon sur une durée supérieure à dix minutes.

Selon des caractéristiques particulières, le moyen de détermination de la précision de la fonction d'horodatage de l'équipement est adapté à calculer une dérive temporelle en comparant la durée écoulée entre les dates de capture d'au moins deux messages incluant un temps de référence étalon fournies par la fonction horodatage de l'équipement avec la différence des temps de référence étalons contenus dans ces messages.

Selon des caractéristiques particulières, le moyen de capture est adapté à appliquer un filtre de capture qui ne laisse passer que lesdits messages incluant un temps de référence étalon.

Selon un troisième aspect, la présente invention vise un programme d'ordinateur chargeable dans un système informatique, ledit programme contenant des instructions permettant la mise en oeuvre du procédé de mesure tel que succinctement exposé ci-dessus.

Selon un quatrième aspect, la présente invention vise un support d'informations lisibles par un ordinateur ou un microprocesseur, amovible ou non, conservant des instructions d'un programme informatique, caractérisé en ce qu'il permet la mise en oeuvre du procédé de mesure, tel que succinctement exposé ci-dessus.

Les avantages, buts et caractéristiques de ce dispositif de mesure, de ce programme d'ordinateur et de ce support d'informations étant similaires à ceux du procédé de mesure objet de la présente invention, tel que succinctement exposé ci-dessus, ils ne sont pas rappelés ici.

D'autres avantages, buts et caractéristiques de la présente invention ressortiront de la description qui va suivre, faite, dans un but explicatif et nullement limitatif, en regard des dessins annexés, dans lesquels :

- la figure 1 représente, schématiquement, un mode de réalisation particulier du dispositif objet de la présente invention et un réseau véhiculant des trames incluant un temps de référence et
- la figure 2 représente, sous forme d'un logigramme, des étapes mises en oeuvre dans un mode de réalisation particulier du procédé objet de la présente invention.

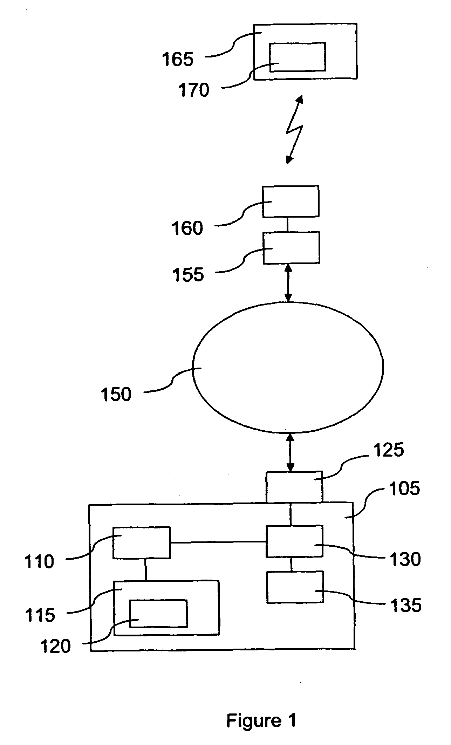

Comme on l'observe en figure 1, dans un mode de réalisation particulier du dispositif objet de la présente invention, un équipement est constitué d'un analyseur de réseau à étalonner 105 comportant un microcontrôleur 110 et une mémoire de programme 115 conservant un programme 120 implémentant le procédé objet de la présente invention. L'analyseur de réseau 105 met en oeuvre un port 125 de connexion à un réseau 150, ledit port étant associé à un filtre 130 et à un moyen d'horodatage 135, de manière connue en soit. En effet, l'analyseur réseau 105 est pourvu de la capacité de dater avec précision les trames réseau qu'il reçoit.

Ainsi, le programme d'ordinateur 120 objet de la présente invention est chargeable dans un système informatique et contient des instructions permettant la mise en oeuvre du procédé de mesure tel que succinctement exposé ci-dessus. La mémoire de programme 115 peut être un composant mémoire, une mémoire intégrée au microcontrôleur 110, une mémoire amovible, par exemple une carte mémoire ou un CD-ROM. Ce support conserve les instructions du programme informatique 120.

Le réseau 150 véhicule des trames Ethernet et est de type NTP (acronyme de « Network Time Protocol »). Il est relié à un serveur 155 de temps de référence, lui-même relié à un système de réception 160 de signaux émis par des satellites 165 munis d'horloges atomiques 170. Ainsi, le réseau NTP met en oeuvre une référence de temps très précise (par exemple provenant de la constellation de satellites « GPS », acronyme de « Global Positioning System », dont les satellites sont équipés d'horloge atomique).

La mise en oeuvre de l'invention concerne trois sous-ensembles :

- l'environnement de test, qui est capable de fournir une référence horaire précise transportée dans des messages conformes au protocole NTP ;
- la capture pendant une durée de test de messages spécifiques comportant un temps de référence témoin ; comme exposé plus bas, plus la durée de test est grande, meilleure est la précision et
- le calcul de la dérive par comparaison des dates de capture du premier et du dernier messages comportant un temps de référence, au cours du test, avec les temps de référence que ces messages comportent.

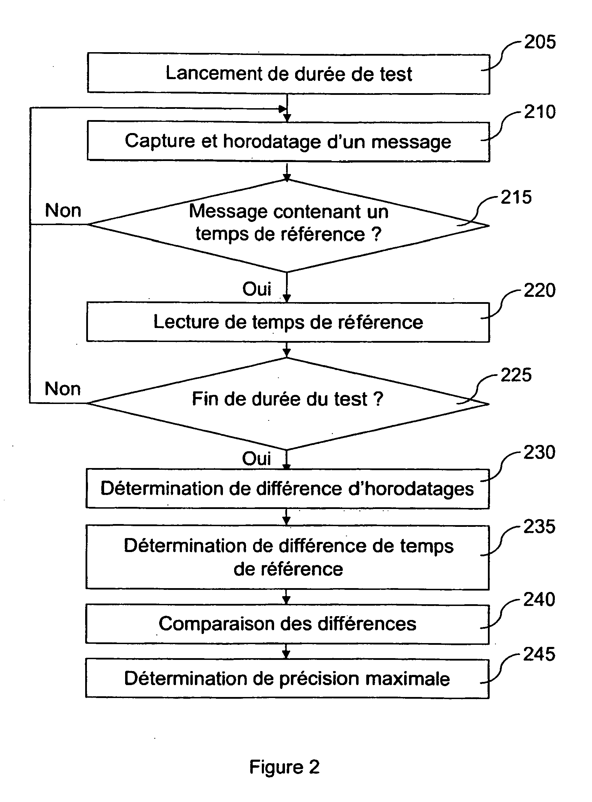

Comme on l'observe en figure 2, pour mettre en oeuvre un mode de réalisation particulier du procédé objet de la présente invention, on effectue une étape 205 de lancement de la durée du test. Au cours de cette étape 205, l'utilisateur, ou une valeur mémorisée détermine la durée du test, supérieure à dix minutes et préférentiellement de l'ordre d'une heure. On observe que le lancement peut être manuel, c'est-à-dire effectué par l'utilisateur, ou automatique, par exemple à une heure quotidienne fixe ou à chaque mise sous tension de l'analyseur de réseau 105. Au cours de l'étape 205, l'équipement à étalonner est connecté et est configuré pour enregistrer les messages comportant un temps de référence NTP.

Parallèlement, au cours d'une étape non représentée, le serveur 155 effectue la génération du temps de référence étalon à partir de signaux fournis par une constellation de satellites équipés d'horloges atomiques. Le serveur 155 émet, sur le réseau 150, des trames NTP comportant le temps de référence étalon, de manière périodique, par exemple toutes les 64 secondes.

Puis, au cours d'une étape 210, on effectue la capture et l'horodatage d'un message circulant sur le réseau, de manière connue en soi. Au cours d'une étape 215, on détermine si ce message comporte un temps de référence. Si non, on retourne à l'étape 210. Si le message comporte un temps de référence, au cours d'une étape 220, on effectue une lecture du temps de référence.

Ainsi, pour faciliter la mise en oeuvre de la présente invention, il est préconisé d'appliquer un filtre de capture, si l'équipement à tester le permet, afin de ne capturer que le trafic NTP. Préférentiellement, au cours de l'étape 215, on vérifie régulièrement la présence des messages NTP dans la capture réalisée. On note que la période d'émission de ces messages est dépendante de l'environnement (elle est, par exemple, de 64 secondes).

Puis, au cours d'une étape 225, on détermine si la durée du test est achevée. Si non, on retourne à l'étape 210. Si la durée du test est achevée, au cours d'une étape 230, on détermine la différence entre les horodatages du premier et du dernier messages reçus au cours de la durée du test. Cette information d'horodatage est également appelée « timestamp » sur de nombreux équipements. Le résultat $T_{analyeur}$ indique la durée écoulée mesurée par l'équipement.

$$T_{analyseur} = \text{Timestamp}_{\text{dernier message NTP}} - \text{Timestamp}_{\text{premier message NTP}}.$$

Au cours d'une étape 235, on détermine la différence entre les temps de référence du premier et du dernier messages reçus au cours de la durée du test. On calcule ainsi la différence entre le temps de référence indiqué dans le dernier message NTP capturé au cours du test et le temps de référence indiqué dans le premier message NTP capturé au cours du test. Le résultat indique la durée de référence écoulée. On note que le temps de référence correspond au champ « Transmit Timestamp » du message NTP:

$$T_{référence} = \text{Transmit Timestamp}_{\text{dernier message NTP}} - \text{Transmit Timestamp}_{\text{premier message NTP}}.$$

Au cours d'une étape 240, on détermine la différence entre les différences mesurées au cours des étapes 230 et 235, pour déterminer la dérive de l'horodatage de l'équipement par rapport au temps de référence. La dérive temporelle de l'équipement pendant la durée du test est ainsi obtenue en calculant la différence entre les deux durées précédemment obtenues :

$$\text{Dérive}_{analyseur} = T_{référence} - T_{analyseur}.$$

Par exemple, on donne cette dérive en valeur absolue ou, après division par la durée du test, en valeur relative, par exemple en ppm (acronyme de « partie par million ».

Au cours d'une étape 245, on détermine la précision maximale de la dérive mesurée au cours de l'étape 240. La précision maximale de la mesure est directement liée à la précision de la référence de temps ($P_{ref}$, sans unité), la gigue (ou « jitter ») des trames réseau NTP ($J_{ntp}$, secondes), la durée du test (T, secondes). Cette précision maximale ($P_{max}$, sans unité) est donnée par la formule suivante:

$$P_{max} = P_{ref} + J_{NTP}/T$$

On note que, avec une mise en place de NTP V4 synchronisé sur le temps propagé par la constellation GPS, une précision de 1 ppm est atteinte en 1 heure de test.

Comme on le comprend à la lecture de la description ci-dessus, la mise en oeuvre de la présente invention a comme intérêt qu'elle ne nécessite aucun démontage ni paramétrage spécifique de l'équipement puisqu'elle s'appuie sur une utilisation nominale et opérationnelle de l'équipement. De plus, cette solution permet d'atteindre un niveau de précision de l'étalonnage plus ou moins élevé en fonction du besoin de l'utilisateur. La présente invention permet aussi d'étalonner plusieurs équipements simultanément

**Revendications**

1. Procédé de mesure de la dérive temporelle d'un équipement électronique relié à un réseau et susceptible de fournir un horodatage, **caractérisé en ce qu'**il comporte :

   - une étape (210, 215) de capture et d'horodatage par ledit équipement d'au moins deux messages incluant chacun un temps de référence étalon circulant sur ledit réseau et
   - une étape (230 à 245) de détermination de la précision de la fonction d'horodatage de l'équipement en fonction desdits temps de référence étalon et desdits horodatages fournis par ledit équipement.

2. Procédé selon la revendication 1, **caractérisé en ce que**, au cours de l'étape (210, 215) de capture, chaque message capturé comporte une trame Ethernet circulant sur ledit réseau, trame qui inclue le temps de référence étalon.

3. Procédé selon l'une quelconque des revendications 1 ou 2, **caractérisé en ce que** chaque message incluant un temps de référence étalon est conforme au protocole NTP (acronyme de « Network Time Protocol » pour protocole de temps réseau).

4. Procédé selon l'une quelconque des revendications 1 à 3, **caractérisé en ce que**, au cours de l'étape (210, 215) de capture, on capture une pluralité de messages incluant un temps de référence étalon sur une durée supérieure à dix minutes.

5. Procédé selon l'une quelconque des revendications 1 à 4, **caractérisé en ce que**, au cours de l'étape (230 à 245) de détermination de la précision de la fonction d'horodatage de l'équipement, on calcule une dérive temporelle en comparant la durée écoulée entre les dates de capture d'au moins deux messages incluant un temps de référence étalon fournies par la fonction horodatage de l'équipement avec la différence des temps de référence étalons contenus dans ces messages.

6. Procédé selon l'une quelconque des revendications 1 à 5, **caractérisé en ce qu'**il comporte une étape de génération du temps de référence étalon à partir de signaux fournis par une constellation de satellites équipés d'horloges atomiques.

7. Procédé selon l'une quelconque des revendications 1 à 6, **caractérisé en ce que**, au cours de l'étape (210, 215) de capture, ledit équipement applique un filtre de capture qui ne laisse passer que lesdits messages incluant un temps de référence étalon.

8. Dispositif de mesure de la dérive temporelle d'un équipement électronique (105) relié à un réseau (150) et susceptible de fournir un horodatage, **caractérisé en ce qu'**il comporte :

   - un moyen (125, 130) de capture d'au moins deux messages incluant chacun un temps de référence étalon circulant sur ledit réseau ;
   - un moyen d'horodatage (135) desdits au moins deux messages ; et
   - un moyen (110 à 120) de détermination de la précision de la fonction d'horodatage de l'équipement en fonction desdits temps de référence étalon et desdits horodatages fournis par ledit équipement.

**9.** Programme d'ordinateur (120) chargeable dans un système informatique (105), ledit programme contenant des instructions permettant la mise en oeuvre du procédé de mesure selon l'une quelconque des revendications 1 à 7.

**10.** Support d'informations (115) lisibles par un ordinateur ou un microprocesseur, amovible ou non, conservant des instructions d'un programme informatique, **caractérisé en ce qu'**il permet la mise en oeuvre du procédé de mesure selon l'une quelconque des revendications 1 à 7.


**Claims**

**1.** Method for measurement of the temporal drift of an electronic equipment item connected to a network and able to provide time-stamping, **characterized in that** it comprises:

- a step (210, 215) of capturing and time-stamping by said equipment item of at least two messages each including a standard reference time passing in the said network and
- a step (230 to 245) of determining the precision of the time-stamping function of the equipment item according to the said standard reference time and said time-stamping provided by the said equipment item.

**2.** Method according to claim 1, **characterized in that**, during the capturing step (210, 215), each captured message comprises an Ethernet frame passing in the said network, which frame includes the standard reference time.

**3.** Method according to any one of claims 1 or 2, **characterized in that** each message including a standard reference time is in accordance with the NTP protocol (NTP being an acronym for "Network Time Protocol").

**4.** Method according to any one of claims 1 to 3, **characterized in that**, during the capturing step (210, 215), a plurality of messages including a standard reference time is captured over a period in excess of ten minutes.

**5.** Method according to any one of claims 1 to 4, **characterized in that**, during the step (230 to 245) of determining the precision of the time-stamping function of the equipment item, a temporal drift is calculated by comparing the period elapsed between the moments of capture of at least two messages including a standard reference time provided by the time-stamping function of the equipment item with the difference in the standard reference times contained in those messages.

**6.** Method according to any one of claims 1 to 5, **characterized in that** it comprises a step of generating the standard reference time from signals provided by a constellation of satellites equipped with atomic clocks.

**7.** Method according to any one of claims 1 to 6, **characterized in that**, during the capturing step (210, 215), the said equipment item applies a capture filter that lets through only the said messages including a standard reference time.

**8.** Device for measurement of the temporal drift of an electronic equipment item (105) connected to a network (150) and able to provide time-stamping, **characterized in that** it comprises:

- a means (125 to 130) for capturing at least two messages each including a standard reference time passing in the said network;
- a means (135) for time-stamping said at least two messages; and
- a means (110 to 120) for determining the precision of the time-stamping function of the equipment item according to the said standard reference time and said time-stamping provided by the said equipment item.

**9.** Computer program (120) that can be loaded into a computer system (105), the said program containing instructions enabling the implementation of the measurement method according to any one of claims 1 to 7.

**10.** A medium for information items (115) readable by a computer or a microprocessor, removable or otherwise, storing instructions of a computer program, **characterized in that** it enables the implementation of the measurement method according to any one of claims 1 to 7.

**Patentansprüche**

1. Verfahren zum Messen der zeitlichen Abweichung einer elektronischen Einrichtung, die mit einem Netzwerk verbunden ist und einen Zeitstempel erstellen kann,
   **dadurch gekennzeichnet, dass**
   es umfasst:

   - einen Schritt (210, 215) zum Erfassen von zumindest zwei Nachrichten und Erstellen eines Zeitstempels mittels der Einrichtung, welche Nachrichten jeweils eine in dem Netzwerk zirkulierende Normalreferenzzeit enthalten, und
   - einen Schritt (230 bis 245) zum Ermitteln der Genauigkeit der Zeitstempelfunktion der Einrichtung in Abhängigkeit von den Normalreferenzzeiten und von den mittels der Einrichtung erstellten Zeitstempeln.

2. Verfahren nach Anspruch 1,
   **dadurch gekennzeichnet, dass**
   im Laufe des Erfassungsschritts (210, 215) jede erfasste Nachricht einen Ethernet-Datenblock aufweist, der im Netzwerk zirkuliert und die Normalreferenzzeit enthält.

3. Verfahren nach einem der Ansprüche 1 oder 2,
   **dadurch gekennzeichnet, dass**
   jede eine Normalreferenzzeit enthaltende Nachricht dem NTP-Protokoll (Akronym von "Network Time Protocol" für Netzwerkzeitprotokoll) entspricht.

4. Verfahren nach einem der Ansprüche 1 bis 3,
   **dadurch gekennzeichnet, dass**
   im Laufe des Erfassungsschritts (210, 215) über eine Zeitdauer von mehr als zehn Minuten eine Mehrzahl von eine Normalreferenzzeit enthaltenden Nachrichten erfasst wird.

5. Verfahren nach einem der Ansprüche 1 bis 4,
   **dadurch gekennzeichnet, dass**
   im Laufe des Schritts (230 bis 245) zum Ermitteln der Genauigkeit der Zeitstempelfunktion der Einrichtung eine zeitliche Abweichung errechnet wird, indem die Zeit, die zwischen den durch die Zeitstempelfunktion der Einrichtung erstellten Zeitangaben für die Erfassung von zumindest zwei Nachrichten mit Normalreferenzzeit abgelaufen ist, mit der Differenz aus den in diesen Nachrichten enthaltenen Normalreferenzzeiten verglichen wird.

6. Verfahren nach einem der Ansprüche 1 bis 5,
   **dadurch gekennzeichnet, dass**
   es einen Schritt zum Erzeugen einer Normalreferenzzeit ausgehend von Signalen umfasst, die von einer Konstellation von Satelliten bereitgestellt werden, die mit Atomuhren ausgestattet sind.

7. Verfahren nach einem der Ansprüche 1 bis 6,
   **dadurch gekennzeichnet, dass**
   im Laufe des Erfassungsschritts (210, 215) die Einrichtung einen Erfassungsfilter anwendet, der nur die eine Normalreferenzzeit enthaltenden Nachrichten durchlässt.

8. Vorrichtung zum Messen der zeitlichen Abweichung einer elektronischen Einrichtung (105), die mit einem Netzwerk (150) verbunden ist und einen Zeitstempel erstellen kann,
   **dadurch gekennzeichnet, dass**
   sie aufweist:

   - ein Mittel (125, 130) zum Erfassen von zumindest zwei Nachrichten, die jeweils eine in dem Netzwerk zirkulierende Normalreferenzzeit enthalten;
   - ein Mittel (135) zum Erstellen eines Zeitstempels für die zumindest zwei Nachrichten; und
   - ein Mittel (110 bis 120) zum Ermitteln der Genauigkeit der Zeitstempelfunktion der Einrichtung in Abhängigkeit von den Normalreferenzzeiten und von den mittels der Einrichtung erstellten Zeitstempeln.

9. Computer-Programm (120), das in ein EDV-System (105) geladen werden kann, wobei das Programm Anweisungen enthält, mit denen es möglich ist, das Messverfahren nach einem der Ansprüche 1 bis 7 durchzuführen.

10. Träger (115) für Informationen, die von einem tragbaren oder nicht tragbaren Computer oder Mikroprozessor lesbar sind, welcher die Anweisungen eines EDV-Programms aufbewahrt,
**dadurch gekennzeichnet, dass**
er die Durchführung des Messverfahrens nach einem der Ansprüche 1 bis 7 gestattet.

Figure 1

Figure 2

**EP 2 245 771 B1**

## RÉFÉRENCES CITÉES DANS LA DESCRIPTION

**Documents brevets cités dans la description**

- US 20040066775 A
- WO 03046766 A